# EUROPEAN PATENT APPLICATION

(11) **EP 4 506 095 A2**
(43) Date of publication of application: **12.02.2025**
(21) Application number: 23900064.9
(22) Date of filing: 07.12.2023
(51) Int. Cl.: B23K 26/00, B23K 26/08, B23K 26/70

(54) **CONTROL METHOD FOR LASER MACHINING DEVICE, AND DEVICE AND COMPUTER PROGRAM MEDIUM**

(30) Priority: 08.12.2022 CN 202211576072
(71) Applicant: Makeblock Co., Ltd., Shenzhen, Guangdong 518000 (CN)
(72) Inventor: ZHAO, Zuoliang, Shenzhen, Guangdong 518000 (CN); GAO, Chao, Shenzhen, Guangdong 518000 (CN)
(74) Representative: Ipside
(86) International application number: PCT/CN2023/137159
(87) International publication number: WO 2024/120495

(57) **Abstract**

The disclosure provides a method for controlling a laser processing device, a device, and a computer program medium. The laser processing device is equipped with an execution module to execute laser processing. The method includes the following. An intervention is sensed during the laser processing performed by the laser processing device. The execution module is controlled to switch a laser output to a weak light output in response to the intervention, where a power of a weak light is less than a reference laser power of the laser processing. The disclosure can eliminate the safety hazard due to user's intervention during the laser processing performed by the laser processing device.

## Description

### CROSS-REFERENCE

This application claims priority to Chinese Patent Application No. 2022115760721, filed December 8, 2022, and entitled "METHOD FOR CONTROLLING LASER PROCESSING DEVICE AND APPARATUS", the entire disclosure of which is incorporated herein by reference.

### TECHNICAL FIELD

The disclosure relates to the field of laser processing technology, and in particular, to a method for controlling a laser processing device, a device, and a computer program medium.

### BACKGROUND

With the development of laser processing device from industrial applications to end-user applications, the laser processing device is no longer limited to industrial applications. The laser processing device has gradually become an intelligent hardware available for end-users, allowing people to perform laser processing on an object through the laser processing device.

During the process performed by the laser processing device, an execution module of the laser processing device is controlled to emit laser and perform processing on the object.

However, during the process on the object, the laser emitted by the execution module of the laser processing device is of high power, which may pose serious threats to the safety of a user when the user touches a processing region, for example, when the user opens a closed cabin of the laser processing device during the process, or the user touches a region being processed by the execution module.

As the laser processing continues, if the user approaches and the laser processing device continues to operate, the laser processing device is likely to injure the user, leading to a safety accident.

Therefore, how to eliminate the safety hazard due to user's intervention during the laser processing is a problem to be solved.

### SUMMARY

The disclosure aims to eliminate the safety hazard due to user's intervention during laser processing.

According to an aspect of the disclosure, the disclosure provides a method for controlling a laser processing device. The laser processing device is equipped with an execution module to execute laser processing, and the method includes the following. An intervention is sensed during the laser processing performed by the laser processing device. The execution module is controlled to switch a laser output to a weak light output in response to the intervention, where a power of a weak light is less than a reference laser power of the laser processing.

According to an aspect of the disclosure, after the execution module is controlled to switch the laser output to the weak light output in response to the intervention, where the power of the weak light is less than the reference laser power of the laser processing, the method includes the following. The execution module is controlled to terminate the weak light output and to continue the laser processing at the reference laser power, in response to the intervention being removed.

According to an aspect of the disclosure, the power of the weak light output is less than 39 milliwatt (mW).

According to an aspect of the disclosure, the intervention includes an external intervening action. During the laser processing performed by the laser processing device, the intervention is sensed as follows. During the laser processing performed by the execution module of the laser processing device, an electrical signal is generated by a sensing component of the laser processing device in response to the external intervening action. The external intervening action is sensed according to the electrical signal sent by the sensing component.

According to an aspect of the disclosure, in response to the intervention, the execution module is controlled to switch the laser output to the weak light output as follows. A movement and a usage of laser of the execution module is controlled in response to the intervention, to make the movement of the execution module interrupted and to switch the laser output to the weak light output by reducing a power of the laser from the reference laser power.

According to an aspect of the disclosure, in response to the intervention, the execution module is controlled to switch the laser output to the weak light output as follows. An on-off switching of the weak light at a preset time interval is controlled, to make the weak light flicker.

According to an aspect of the disclosure, the intervention is a reception of external data. Before the execution module is controlled to terminate the weak light output and to continue the laser processing at the reference laser power, in response to the intervention being removed, the method further includes the following. The external data is configured and stored as an update configuration for an executed program in response to the external data having been received, where the update configuration is used to control the laser processing performed by the execution module. An interrupted program is continued to be executed by the laser processing device after the external data is stored and the intervention is removed.

According to an aspect of the disclosure, before the intervention is sensed during the laser processing performed by the laser processing device, the method further includes the following. A start trajectory point and an end trajectory point of movement control are simulated and located by the laser processing device according to data configured for movement control. A movement pre-calculation is performed according to the start trajectory point and the end trajectory point of movement control, to obtain a program instruction for a movement of the execution module on trajectory points, where the program instruction is used to control the movement of the execution module along the trajectory points distributed in a processing space.

According to an aspect of the disclosure, the laser processing device includes a housing and a sensing component. At least part of the housing defines a processing space. The housing includes an openable barrier, and the barrier is configured to weaken laser transmission from the processing space to an external space of the laser processing device. The sensing component is configured to detect whether the barrier is opened or closed.

According to an aspect of the disclosure, the execution module includes a movable head, and the movable head is disposed in the housing. At least part of a processing object is in the processing space of the laser processing device, and the movable head is configured to send a laser to the processing space to process the processing object.

According to an aspect of the disclosure, before the laser processing performed by the laser processing device, the method further includes the following. A processing movement scheme for the movable head is generated. A preview image of an expected target pattern to be produced on the processing object is generated.

According to an aspect of the disclosure, the laser processing performed by the laser processing device includes the following. The laser is sent by the movable head to the processing object according to the processing movement scheme to change a material of the processing object.

According to an aspect of the disclosure, the laser processing device includes at least one camera disposed in the processing space, and the at least one camera is configured to capture an image of at least part of the processing object.

According to an aspect of the disclosure, the disclosure provides a laser processing device. The laser processing device includes a housing, an execution module, a rail apparatus for driving the execution module to slide, and a processor. At least part of the housing defines a processing space. The execution module and the rail apparatus are disposed in the processing space. The processor is configured to execute any of the above methods.

According to an aspect of the disclosure, the disclosure provides a computer program medium. The computer program medium stores a computer-readable instruction, where the computer-readable instruction, when executed by a processor of a computer, causes the computer to execute the any of the above methods.

In embodiments of the disclosure, for the laser processing currently performed by the laser processing device, the intervention is sensed during the laser processing performed by the laser processing device, and the execution module is controlled to switch the laser output to the weak light output in response to the intervention. The power of the weak light is less than the reference laser power of the laser processing. The output power of the execution module is changed, so that the laser output is switched to the weak light output, thereby reducing or preventing the execution module from injuring the user. In this way, a potential safety hazard may be avoided.

Other properties and advantages of the disclosure will become apparent from the following descriptions, or may be learned from the practice of the present disclosure.

It is to be understood that, the above general description and the following detailed description are merely exemplary and should not construed as limitations to the disclosure.

### BRIEF DESCRIPTION OF THE DRAWINGS

The above and other purposes, features, and advantages of the disclosure will become more apparent by describing in detail exemplary embodiments of the disclosure with reference to accompany drawings.
FIG. 1 is a system architecture diagram applied in an embodiment of the disclosure.
FIG. 2 is a flow chart of a method for controlling a laser processing device provided in an embodiment of the disclosure.
FIG. 3 is a flow chart of sensing an intervention during laser processing of a laser processing device provided in an embodiment of the disclosure.
FIG. 4 is a flow chart of sensing an intervention during laser processing of a laser processing device provided in another embodiment of the disclosure.
FIG. 5 is a flow chart of operations before controlling an execution module to terminate weak light output and to continue laser processing at a reference laser power in response to an intervention being removed, where the intervention is a reception of external data, provided in an embodiment of the disclosure.
FIG. 6 is a schematic view of hardware of a laser processing device provided in an embodiment of the disclosure.
FIG. 7 is a flow chart of operations before sensing the intervention during laser processing of a laser processing device provided in an embodiment of the disclosure.
FIG. 8 is a schematic diagram of a control apparatus of a laser processing device provided in an embodiment of the disclosure.
FIG. 9 is a structural diagram of hardware of a laser processing device provided in an embodiment of the disclosure.

### DETAILED DESCRIPTION

Exemplary embodiments will now be described more fully with reference to the accompanying drawings. However, the exemplary embodiments may be implemented in various forms and should not be construed as limitations to the examples set forth herein; rather, these embodiments are provided so that the present disclosure will be more comprehensive and complete, and will fully convey the concept of exemplary embodiments to those of ordinary skill in the art. The accompanying drawings are merely schematic illustrations of the present disclosure and are not necessarily drawn to scale. The same reference numerals in the drawings indicate the same or similar structures, and thus their detailed description will be omitted.

In addition, the features, structures, or characteristics described may be combined in one or more embodiments in any suitable manner. In the following description, numerous specific details are provided to give full understandings of the embodiments of the present disclosure. However, those of ordinary skill in the art will realize that, technical solutions provided in the resent disclosure may be practiced by omitting one or more specific details, or by other methods, components, apparatus, steps, etc. In other cases, well-known structures, methods, apparatus, implements, materials, or operations will not be shown or described in detail to avoid obscuring aspects of the present disclosure.

Some of the block diagrams shown in the figures are functional entities and do not necessarily correspond to physically or logically separate entities. These functional entities may be implemented in software, or implemented in one or more hardware modules or integrated circuits, or implemented in different networks and/or processor devices and/or microcontroller devices.

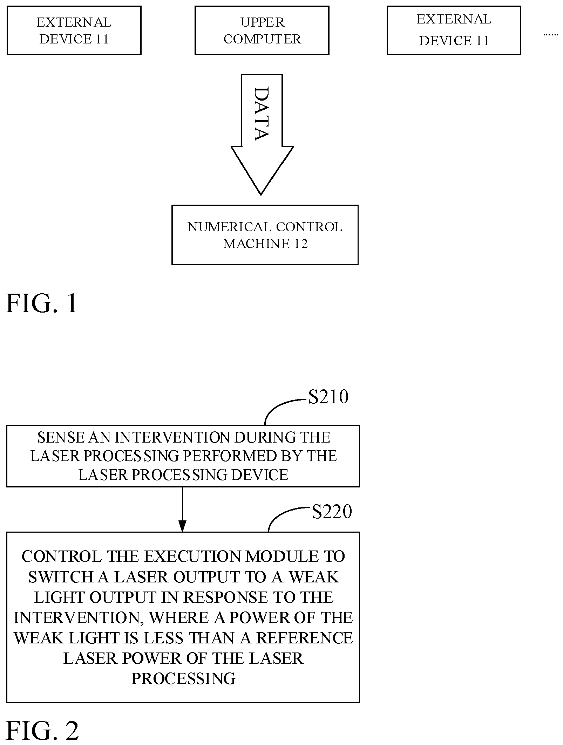

Reference is made to FIG. 1, which is a system architecture diagram applied in an embodiment of the disclosure. The system architecture may include at least one external device 11, such as an upper computer, a numerical control machine 12 for each external device 11, and at least one production fixture (not illustrated) that can be used by the numerical control machine 12, so as to provide functions such as custom laser carving or cutting for the user. Through an imaging process performed by the numerical control machine 12, the laser carving or cutting can be observed, and the laser carving or cutting can be displayed through visualization display.

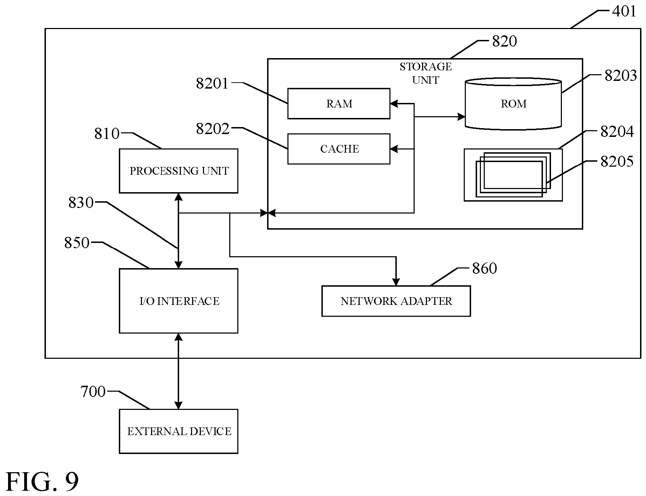

It is to be noted that, the numerical control machine 12 refers to a laser processing device 100 in the following and a processing device in FIG. 9.

It is to be understood that, the number of external devices 11 in FIG. 1 is for illustrative purpose. There may be any number of the external devices 11 according to actual need.

Some technical solutions provided in embodiments of the disclosure may be implemented based on the system architecture illustrated in FIG. 1 or other variant architectures.

Reference is made to FIG. 2, which is a flow chart of a method for controlling a laser processing device provided in an embodiment of the disclosure. The laser processing device is equipped with an execution module to execute laser processing. The method for controlling the laser processing device is provided in embodiments of the disclosure, which includes the following.

At S210, an intervention is sensed during the laser processing performed by the laser processing device.

At S220, the execution module is controlled to switch a laser output to a weak light output in response to the intervention, where a power of a weak light is less than a reference laser power of the laser processing.

The above two operations will be described in detail in following.

In an embodiment of the disclosure, the execution module is an apparatus configured to move on a built-in rail apparatus of the laser processing device and emit laser at a preset power, according to a processing program of the laser processing device.

It is to be noted that, at S210, the technical problem firstly addressed by the embodiment of the disclosure is how to sense the intervention. In an embodiment of the disclosure, the intervention includes at least: (1) external intervening action; (2) reception of external data.

The following describes the methods for sensing the intervention.

External intervening action refers to a situation where a user or an object enters the processing space or a situation where the processing space is changed from a closed state to an open state during the laser processing performed by the laser processing device. In this case, the user may be injured easily or the laser processing device may be damaged. Therefore, it is necessary to monitor the intervention and to respond promptly. For example, the external intervening action may be: (1) a person or an object enters a certain range of the laser processing device; (2) a hardware state of the laser processing device is changed and a preset standard is not met, for example, a lid of the laser processing device is opened.

The external intervening action is monitored by a sensing component disposed on the laser processing device, and the sensing component may be a sensor. When the external intervening action occurs, the sensing component is triggered to generate a corresponding electrical signal, and the laser processing device is configured to determine the occurrence of the external intervening action according to the received electrical signal. For example, the sensor may be a photoelectric sensor or other detection circuits. When the sensor senses that the user enters the processing space, a high-level signal will be generated, thereby allowing the laser processing device during the laser processing to promptly and accurately sense the intervention.

The reception of external data refers to the reception of external data requested by any communication port of the laser processing device. The reception of external data requested by any communication port is monitored in real time. When a communication port requests the reception of external data, the intervention is deemed to occur.

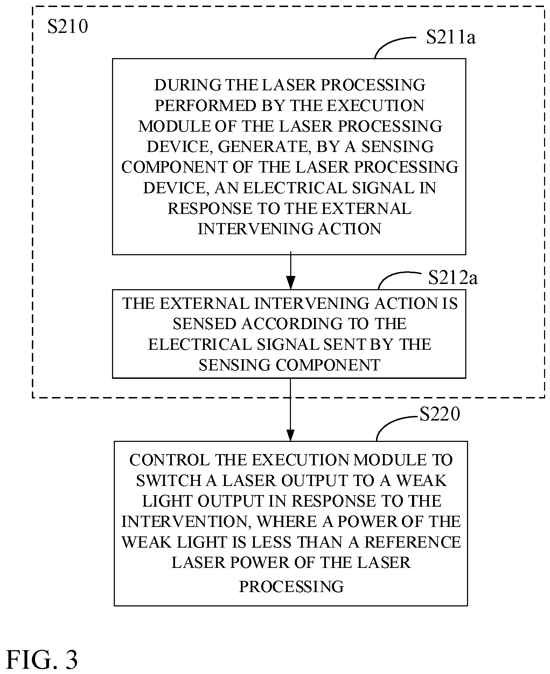

Reference is made to FIG. 3, which is a flow chart of sensing an intervention during laser processing of a laser processing device provided in an embodiment of the disclosure. The intervention includes external intervening action. The embodiment of the disclosure provides that an operation at S210 of sensing the intervention during the laser processing of the laser processing device includes the following.

At S211a, during the laser processing performed by the execution module of the laser processing device, a sensing component of the laser processing device generates an electrical signal in response to the external intervening action.

At S212a, the external intervening action is sensed according to the electrical signal sent by the sensing component.

The above two operations will be described in detail in following, taking the intervention as the external intervening action for an example.

At S211, in order to promptly sense the external intervening action during the laser processing, the laser processing device is equipped with different sensing components according to different structures of the laser processing device to sense the external intervening action. For example, the processing space is defined by an enclosed cabin with a lid. A sensing component is disposed on the lid or around the lid. When the lid is opened or closed, the sensing component is triggered to generate specific electrical signals. In some embodiments, the sensing component can be a hall sensor, a photoelectric sensor, etc. When the lid is opened, a lid-open signal is detected by the sensing component. In this way, the external intervening action is sensed. Similarly, when the lid is closed, a lid-close signal is detected by the sensing component. For another example, the laser processing device is an open laser processing device. For a sensing component configured for the open laser processing device, the sensing component is configured for the laser processing device according to the extent of openness of the laser processing device. In this way, a sensing layer is formed by the sensing component, and a safe processing space is defined by the sensing layer and the laser processing device. When a person or an object contacts the sensing layer, the sensing component will generate specific electrical signals. The open laser processing device may be an apparatus with only the bottom covered by a shell, and the hardware of the laser processing device are exposed except the hardware of the bottom of the laser processing device. Exemplarily, a cuboid has six surfaces. Therefore, five sensing layers need to be formed for the open laser processing device, in order to define a sealed and safe processing space together with the bottom of the open laser processing device.

At S212, the laser processing device determines the occurrence of the external intervening action according to the electrical signal sent by the sensing component at S211.

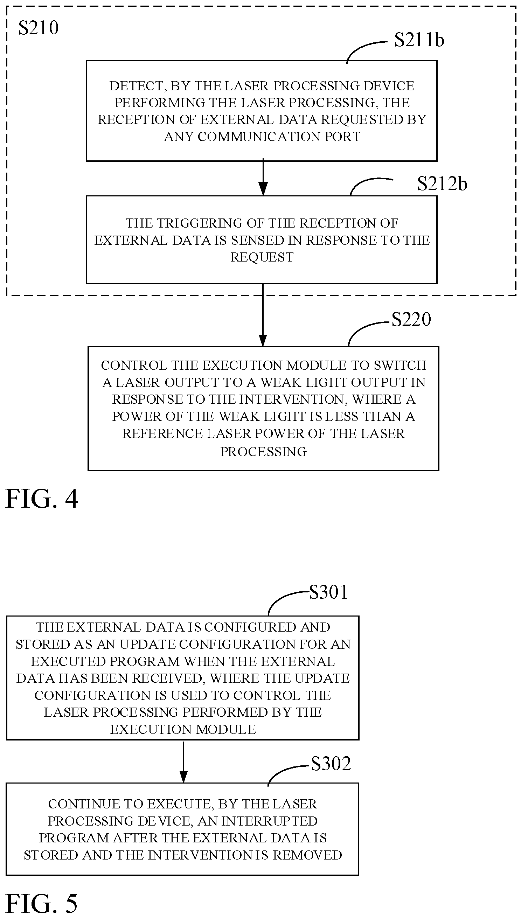

Reference is made to FIG. 4, which is a flow chart of sensing an intervention during laser processing of a laser processing device provided in another embodiment of the disclosure. The intervention includes the reception of external data. The embodiment of the disclosure provides that an operation at S210 of sensing the intervention during the laser processing of the laser processing device includes the following.

At S211b, the laser processing device performing the laser processing detects the reception of external data requested by any communication port.

At S212b, the triggering of the reception of external data is sensed in response to the request.

The above two operations will be described in detail in following, taking the intervention as the reception of external data for an example.

At S211b, the laser processing device detects the reception of external data requested by each communication port in real time during the laser processing performed by the laser processing device on the processing object. It is to be noted that the external data includes but not limited to movement control data.

The reception of external data requested by each communication port is detected in real time. On one hand, real-time performance of the data reception is enhanced without being affected by the current functioning state of the laser processing device, thereby correspondingly enhancing the reliability of data reception. On the other hand, it also allows the user to adjust the unexecuted parts of the processing program according to real-time situations when the laser processing device is operating according to the preset processing program.

It is to be noted that, the laser processing device is equipped with multiple communication ports, such as universal serial bus (USB) ports, serial communication ports, serial communication debug-ports, RGB board serial communication ports, etc. The laser processing device interacts with the external environment through the communication ports.

At S212b, when the reception of external data requested by the communication port of the laser processing device is detected, the reception of external data is triggered, which means that the intervention occurs.

At S220, when the laser processing device senses the intervention, the laser processing device responds correspondingly to eliminate potential dangers posed to the user and the laser processing device. Specifically, the laser processing device immediately controls the execution module to stop at the current position and simultaneously switches the laser output of the execution module to the weak light output. The power of the weak light output is reduced from the reference laser power, and the weak light output is harmless to human body. At this point, the laser processing device is in a state where the processing is unable to continue. If the laser processing device is forced to operate, warning will be given, such as light warning or buzzer warning.

In an embodiment of the disclosure, when the laser processing device senses the intervention, the execution module of the laser processing device stops, and the laser output of the execution module is switched to the weak light output, where the power of the weak light output is reduced, which is harmless to human body.

In another embodiment of the disclosure, when the execution module performs the weal light output, an on-off switching of the weak light at a preset time interval is controlled, to make the weak light flicker. In this way, a stopping point during the laser processing of the execution module is represented, and a suspending state of the execution module is represented.

For example, the laser processing device is an enclosed cabin with an indicator light mounted outside the cabin to indicate the current processing state of the laser processing device. In a cabin-closed state, the indicator light emits blue light and flickers during the laser processing, for example, the on-off period could be 500ms. When the lid is opened, the light spot of the weak light output of the execution module will flash with an on-off time of 500ms, while the indicator light remains continuously blue.

In a processing-adaptive mode, the power of the laser varies around the reference laser power. A formula is as follows: *aimpwr = pwr * curspd* / *aimspd,* where *aimpwr* is a target power (i.e., the actual power of the laser during the laser processing), *pwr* is the power of the laser set in the current execution program (i.e., the reference laser power), *curspd* is a speed of movement at the current trajectory point, which means the speed of the execution module passing the current trajectory point, and *aimspd* is a target speed at the next trajectory point, which means a preset speed of the execution module passing the next trajectory point.

When the external intervening action occurs, the laser processing device suspends the movement of the execution module and reduces the output power of the execution module to ensure the safety of the operator. It is to be noted that, the power of the weak light output should be less than 39mW in order to ensure the safety of the user.

It is to be noted that, when an external intervening action occurs, response methods include but are not limited to the above response methods.

When the reception of external data occurs, the laser processing device suspends the laser processing on the processing object to receive the external data, ensuring real-time data transmission. In this way, the laser processing device can receive the external data in real time, thereby improving communication efficiency and performance. Furthermore, the user is allowed to adjust an unexecuted part of the processing program according to real-time situations during the preset processing performed by the laser processing device, such as replacing the unexecuted part of the current processing program with other processing programs.

It is to be noted that, in the case where the intervention is the reception of external data, response methods include but are not limited to the above response methods, and may also include methods such as the indicator light flickering.

Reference is made to FIG. 5, which is a flow chart of operations before controlling an execution module to terminate weak light output and to continue laser processing at a reference laser power in response to an intervention being removed, where the intervention is a reception of external data, provided in an embodiment of the disclosure. Before controlling the execution module to terminate the weak light output and to continue the laser processing at the reference laser power, in response to the intervention being removed, operations provided in embodiments of the disclosure further includes the following.

At S301, the external data is configured and stored as an update configuration for an executed program when the external data has been received, where the update configuration is used to control the laser processing performed by the execution module.

At S302, the laser processing device continues to execute an interrupted program after the external data is stored and the intervention is removed.

These two operations will be described in detail in the following.

At S301, after the external data has been received and after the laser processing device obtains the external data from the communication port, the external data needs to be stored. During the storing process, the external data will be processed, i.e., the completeness and accuracy of the external data are verified. Verified data becomes valid data for storage. The verified data is movement control data available to the laser processing device. In this way, with the aid of the external data sent through external channels, the laser processing device can be controlled by external devices.

For example, the received external data includes the movement control data for performing the laser processing. The movement control data is used to control, by external devices, for example, the upper computer, the laser processing device. It is to be understood that, the movement control data refers to data used to control the laser processing device. For example, the movement control data is used to control the movement of the execution module of the laser processing device and the usage of laser.

The laser processing device processes the movement control data using corresponding processing methods, according to the movement control data received. The movement control data may either be executed immediately or added to an execution queue, where the movement control data is executed in a first in first out (FIFO) order. It is to be noted that, different movement control data corresponds to different processing methods. For example, some movement control data need to be executed immediately, while others need to be executed in sequence. Through the above operations, the external data received by the laser processing device is processed and stored, so that the laser processing device can use the external data during the laser processing. In this way, the unexecuted part of the current processing program can be adjusted, thereby enabling the processing program of the laser processing device to be flexible and variable.

At S302, when the external data is stored, the intervention of the laser processing device is removed, and the execution module of the laser processing device continues to operate, where the laser output is switched from weak light output to laser output.

In an embodiment of the disclosure, after the intervention is removed, the laser processing device continues to execute the unfinished processing without restarting the laser processing. Restarting the laser processing by the laser processing device means that the laser processing device is unable to continue the unfinished processing program on the processing project after the laser processing device is turned off and started. The laser processing device can only start a new processing program. Therefore, a new processing object is needed, and the unfinished processing object can no long be processed. The laser processing device continuing to process means that the unfinished processing program can be continued on the processing object after the laser processing device is turned off and started, thereby avoiding the waste of material.

Specifically, the laser processing device monitors the state of the intervention in real time. When the intervention is monitored to be removed, the laser processing device is in a state where the processing can continue. In this case, the laser processing device can respond to an instruction of continuing the processing, and the laser processing device continues to perform laser processing on the processing object. While the execution module of the laser processing device is restored to move, the power of the laser output of the execution module is switched to the reference laser power to perform effective processing at the reference laser power.

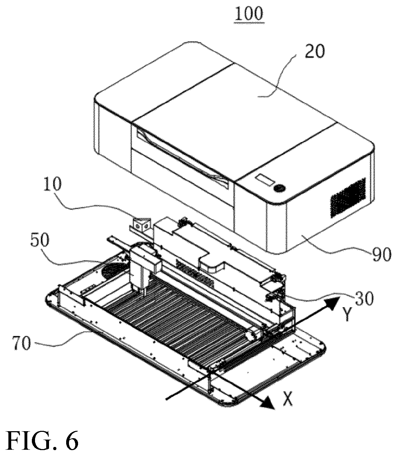

Reference is made to FIG. 6, which is a schematic view of hardware of a laser processing device provided in an embodiment of the disclosure. The laser processing device includes a housing, and the housing defines at least part of the processing space. A movable head is disposed in the housing. The housing includes an openable barrier 20. The barrier 20 is configured to weaken laser transmission from the processing space to the external space of the laser processing device. The housing can be a cabin of the laser processing device, and the barrier 20 can be a lid of the cabin of the laser processing device.

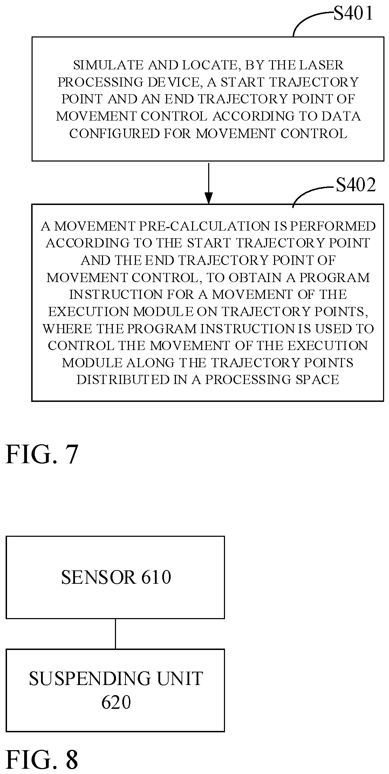

In some embodiments, as illustrated in FIG. 7, a laser processing device 100 includes a housing, a movable head 50, and a camera. The housing defines a processing space, and the camera is disposed in the housing. The camera may be located at a top portion, a side portion, or a junction of the top portion and the side portion of the processing space. When the processing object is processed by the laser processing device, at least part of the processing object is in the processing space of the laser processing device. The camera is configured to capture an image of the at least part of the processing object.

In some embodiments, the laser processing of the laser processing device includes the following. A processing movement scheme for the movable head is generated. A preview image of an expected target pattern to be produced on the processing object is generated. The laser processing device sends the laser to the processing object according to the processing movement scheme to change the material of the processing object.

Specifically, through the display of the preview image, the user can easily perform visualized operations such as editing, aligning, scaling, and viewing the target pattern. After the user edits and aligns the target pattern and adjusts the processing parameters, the processing movement scheme for the movable head is generated. The processing movement scheme includes, but is not limited to speed of movement, path of movement, and duration of movement. The movable head transmits electromagnetic energy to the processing object according to the processing movement scheme to change the material of the processing object. Changing the material of the processing object includes operations such as carving, cutting, pressing, and material spraying printing, etc.

In some embodiments, the camera of the laser processing device 100 includes but is not limited to, a distant camera for capturing panoramic processing images and a close-up camera. The close-up camera is disposed on the movable head 50. The close-up camera is movable and is able to capture images.

In an embodiment, as illustrated in FIG. 7, the housing of the laser processing device 100 includes an upper housing 90 and a bottom housing 70. The upper housing 90 and the bottom housing 70 cooperatively enclose to define a processing space that can accommodate a processing object. The connection between the upper housing 90 and the bottom housing 70 can be detachable connection or fixed connection, or the upper housing 90 and the bottom housing 70 are integrally formed.

In an embodiment, a barrier 20 that can be opened and closed is disposed in the housing. The operator can open the processing space by opening the barrier 20 to place or remove the processing object, i.e., the workpiece. The barrier 20 can be made of translucent material. In this way, the user can observe the laser processing on the processing object in the processing space through the barrier 20 when the barrier 20 is closed. The barrier 20 can filter high-energy laser to weaken the laser transmission from the processing space to the external space of the laser processing device. In this way, laser spill may be reduced, thereby avoiding injuring the user.

Specifically, the blocking and/or filtering effect of the upper housing 90 and the bottom housing 70 can prevent the laser emitted from the movable head 50 from spilling during the operation, thereby avoiding injuring the operator.

Exemplarily, in an embodiment, a rail apparatus may be disposed in the processing space. The movable head 50 is mounted on the rail apparatus. The rail apparatus may include an X-axis rail, and a Y-axis rail. The X-axis rail and the Y-axis rail may be linear rails, or rails with a roller axel and a roller that are in slid fit, as long as the movable head 50 can be driven to move on the X-axis rail and the Y-axis rail to perform the processing. There may be a Z-axis rail disposed in the movable head 50, so that the movable head 50 can move to adjust focus in the Z-axis direction before and/or during the processing.

In an embodiment, a laser device may be disposed in the movable head 50 to generate and output laser. The type of the laser device may include but is not limited to a semiconductor laser device, a solid laser device, a fiber laser device, etc.

In an embodiment, a laser device may be disposed in the laser processing device, and the laser device may be a galvanometer laser device. The galvanometer laser device outputs laser and changes the direction of laser emission through the galvanometer to perform laser processing on the processing object.

In another embodiment, the laser processing device 100 also includes a laser source 30, and the laser source 30 may be a carbon dioxide laser tube, etc. The laser source 30, i.e., the carbon dioxide laser tube, generates and outputs laser, and the laser then enters the movable head 50 through a reflecting mirror. After inner reflection in the movable head 50, the laser is output to process the workpiece. In an embodiment, a reflecting mirror 10 is disposed between the movable head 50 and a laser tube 30. The laser generated by the laser tube 30 is reflected by the reflecting mirror 10, and enters the movable head 50. After optical adjustment such as reflection and focusing, the laser is emitted from the movable head 50 to process the workpiece.

Reference is made to FIG. 7, which is a flow chart of operations before sensing the intervention during laser processing of a laser processing device provided in an embodiment of the disclosure. In an embodiment of the disclosure, before sensing the intervention during the laser processing performed by the laser processing device, the method further includes the following.

At S401, a start trajectory point and an end trajectory point of movement control are simulated and located by the laser processing device according to data configured for movement control.

At S402, a movement pre-calculation is performed according to the start trajectory point and the end trajectory point of movement control, to obtain a program instruction for a movement of the execution module on trajectory points, where the program instruction is used to control the movement of the execution module along the trajectory points distributed in a processing space.

These two operations will be described in detail in the following.

At S401, the stored movement control data are multiple frames of data sequentially sent by an external device. These frames of data are used to control the movement and the usage of laser of a corresponding execution module of the laser processing device at different trajectory points.

Therefore, according to the receiving sequence, the laser processing device obtains the movement control data frame by frame to sequentially generate a queue of trajectory points. Queue elements in the queue of trajectory points includes trajectory point movement instructions, which carry multiple instruction parameters, such as the position of points and the types of points on a corresponding curve trajectory. It is to be understood that the trajectory point movement instructions included in the queue elements are used to describe the trajectory points at which the laser cutting or carving is performed, and are also used to indicate the state of movement of the execution module at those trajectory points.

The generation of the queue of trajectory points is a process of continuously obtaining the movement control data from a buffer to convert the movement control data into trajectory point movement instructions, and adding the instructions to the queue. The trajectory point movement instructions constitute the data in the queue elements.

Even if conditions permit, the laser processing process of the laser processing device is not immediately executed under the control of the queue of trajectory points, but jumps to perform curve pre-scanning of the queue of trajectory points.

It is to be noted that, the queue of trajectory points is mapped to a processing curve and a processing work state (the usage of laser), where the processing curve refers to a movement curve of tools that are used to perform laser cutting and/or carving, such as a motor-driven cutting head and/or a movable head. The processing work state refers to laser power, laser mode, etc., in the processing process.

The processing curve includes several curve segments, and different curve segments correspond to significantly different processing. In one curve segment, the processing at different trajectory points is relatively stable. Therefore, pre-scanning the queue of trajectory points to determine the beginning and the end of each curve segment can avoid recalculation in the subsequent processing, thereby reducing the amount of calculation in the subsequent processing, and improving the processing efficiency.

The queue of trajectory points will be traversed by the laser processing device. The processing curve is formed by multiple trajectory points corresponding to the queue of trajectory points. Correspondingly, different curve segments of the processing curve are also formed by trajectory points, and the range of a curve segment is determined by the start trajectory point and the end trajectory point.

Therefore, through the execution of curve pre-scanning, the start trajectory point and the end trajectory point of each of the mapped curve segments are located one by one, thereby facilitating movement pre-calculation of each trajectory point after determining the range of each curve segment.

At S402, after a start point and an end point of a curve segment are determined by pre-scanning of the curve segment, movement pre-calculation is performed on the trajectory points covered by the curve segment to obtain instruction parameters of the trajectory points.

The instruction parameters obtained from the pre-calculation will be used to more accurately describe and control the movement of the execution module of the laser processing device. Therefore, the instruction parameters are updated in the corresponding queue elements of the queue of trajectory points. The trajectory point movement instructions carrying abundant and more accurate instruction parameters can make the processing performed by the laser processing device more reliable and precise.

Exemplarily, the instruction parameters obtained from the pre-calculation may include information such as the position vector of a corresponding trajectory point in three-dimensional space. For example, after determining the start trajectory point and the end trajectory point of the currently scanned curve segment, the length of the curve segment can be obtained. The position determination and speed planning of the trajectory points can be pre-calculated according to the length of the curve segment, thereby expanding the instruction parameters carried by the trajectory point movement instructions.

Under the normal state of the laser processing device, after the pre-calculation of all curve segments is completed, the laser processing device is configured to traverse the queue of trajectory points to sequentially operate the curve segments and the trajectory points on the curve segments, thereby achieving carving or cutting at each trajectory point by the laser processing device.

Exemplarily, as previously pointed out, only when the buffer is confirmed to be empty or the queue of trajectory points is full, the laser processing device is allowed to traverse the queue of trajectory points.

It is to be noted that the operation of each curve segment refers to the execution process of sending the corresponding trajectory operation instructions, and each curve segment includes multiple trajectory points. Therefore, the operation of the curve segment is the process of separate operation of the multiple trajectory points.

Reference is made to FIG. 8, which is a schematic diagram of a control apparatus of a laser processing device provided in an embodiment of the disclosure. The control apparatus of the laser processing device provided in an embodiment of the disclosure mainly includes a sensor 610 and a suspending unit 620.

The sensor 610 is configured to sense an intervention during the laser processing process performed by the laser processing device.

The suspending unit 620 is configured to control the execution module to switch a laser output to a weak light output in response to the intervention, where a power of a weak light is less than a reference laser power of the laser processing.

The method for controlling a laser processing device provided in embodiments of the disclosure can be executed by the processing device in FIG. 9. The processing device provided in embodiments of the disclosure will be described in the following with reference to FIG. 9. The processing device illustrated in FIG. 8 is merely an example and should not limit the functionality and scope of use of the embodiments of the disclosure.

As illustrated in FIG. 9, the processing device is illustrated in the form of a general computer device. Components of the processing device may include, but are not limited to: at least one processing unit 810, at least one storage unit 820, and a bus 830 connecting different system components (including the storage unit 820 and the processing unit 810).

The storage unit stores program code. The program code, when executed by the processing unit 810, may cause the processing unit 810 to perform the operations according to the example embodiments of the disclosure described in the example methods in this specification. For example, the processing unit 810 may perform each operation illustrated in FIG. 2.

The storage unit 820 may include a readable medium in the form of a volatile storage unit, for example, a random access memory (RAM) 8201 and/or a cache storage unit 8202, and may further include a read-only memory (ROM) 8203.

The storage unit 820 may further include a program/utility tool 8204 having a group of (at least one) program modules 8205. Such a program module 8205 includes, but is not limited to, an operating system, one or more application programs, other program modules, and program data. Each or a combination of these examples may include implementation of a network environment.

The bus 830 may represent one or more of several types of bus structures, including a storage unit bus or storage unit controller, a peripheral bus, an accelerated graphics port, a processing unit, or a local bus using any one of a plurality of bus structures.

The processing device may alternatively communicate with one or more external devices 700 (such as a keyboard, a pointing device, and a Bluetooth device), may alternatively communicate with multiple devices that enable a user to interact with the processing device, and/or communicate with any device (such as router or a modem) that enables the processing device to communicate with one or more other computing devices. Such communication may be performed by using an input/output (I/O) interface 850. In addition, the processing device may further communicate with one or more networks (for example, a local area network (LAN), a wide area network (WAN), and/or a public network, such as Internet) by using a network interface controller 860. It is to be understood that although not shown in the figure, other hardware and/or software modules may be used in combination with the processing device, including, but not limited to microcode, a device drive, a redundancy processing unit, an external disk drive array, a RAID system, a tape drive, a data backup storage system, or the like.

According to the foregoing descriptions of the implementations, those of ordinary skill in the art may readily understand that the example implementations described herein may be implemented by using software, or may be implemented by combining software and necessary hardware. Therefore, the technical solutions of the embodiments of the disclosure may be implemented in a form of a software product. The software product may be stored in a non-volatile storage medium (which may be a compact disc read-only memory (CD-ROM), a USB flash drive, a removable hard disk, or the like) or in a network and includes several instructions for instructing a computing device (which may be a personal computer, a server, a terminal device, a network device, or the like) to perform the methods described in the embodiments of the disclosure.

In an example embodiment of the disclosure, a computer program medium is further provided, storing computer-readable instructions, the computer-readable instructions, when executed by a processor of a computer, causing the computer to perform the method described in the foregoing method embodiments.

According to an embodiment of the disclosure, a program product for performing the method in the foregoing method embodiments is further provided. The program product may use a portable CD-ROM and include program code, and may be run on a terminal device such as a personal computer. However, the program product of the disclosure is not limited to this. In this specification, the readable storage medium may be any tangible medium including or storing a program, and the program may be used by or in combination with an instruction execution system, apparatus, or device.

The program product may be any combination of one or more readable mediums. The readable medium may be a computer-readable signal medium or a computer-readable storage medium. The readable storage medium may be, for example, but is not limited to, an electric, magnetic, optical, electromagnetic, infrared, or semi-conductive system, apparatus, or device, or any combination thereof. More examples (a non-exhaustive list) of the readable storage medium may include: an electrical connection having one or more wires, a portable disk, a hard disk, a RAM, a ROM, an erasable programmable ROM (EPROM or flash memory), an optical fiber, a portable CD-ROM, an optical storage device, a magnetic storage device, or any appropriate combination thereof.

The computer-readable signal medium may include a data signal propagated in a baseband or as part of a carrier, and stores readable program code. The propagated data signal may be in multiple forms, including but not limited to, an electromagnetic signal, an optical signal, or any appropriate combination thereof. The readable signal medium may alternatively be any readable medium other than the readable storage medium. The readable medium may be configured to send, propagate, or transmit a program used by or used in combination with an instruction execution system, an apparatus, or a device.

The program code included in the readable medium may be transmitted by using any appropriate medium, including but not limited to, a wireless medium, a wired medium, an optical cable, radio frequency (RF) or the like, or any appropriate combination thereof.

The program code used for executing the operations of the disclosure may be written by using one or more programming languages or a combination thereof. The programming languages include an object-oriented programming language such as Java, C++ and the like, and also include a conventional procedural programming language such as "C" or similar programming languages. The program code may be completely executed on a user computing device, partially executed on a user device, executed as an independent software package, partially executed on a user computing device and partially executed on a remote computing device, or completely executed on a remote computing device or server. In a case involving a remote computing device, the remote computing device may be connected to a user computing device through any type of network including a LAN or a WAN, or may be connected to an external computing device (for example, through the Internet by using an Internet service provider).

It is to be noted that, although several modules or units of a device for action execution are mentioned in the foregoing detailed descriptions, the division is not mandatory. Actually, according to the embodiments of the disclosure, the features and functions of two or more modules or units described above may be specified in one module or unit. Conversely, features and functions of one module or unit described above may be further divided into a plurality of modules or units to be specified.

In addition, although the various steps of the method in the disclosure are described in a specific order in the accompanying drawings, this does not require or imply that the steps are bound to be performed in the specific order, or all the steps shown are bound to be performed to achieve the expected result. Additionally, or alternatively, some steps may be omitted, a plurality of steps may be combined into one step for execution, and/or one step may be decomposed into a plurality of steps for execution, and the like.

According to the foregoing descriptions of the embodiments, those of ordinary skill in the art may readily understand that the example implementations described herein may be implemented by using software, or may be implemented by combining software and necessary hardware. Therefore, the technical solutions of the embodiments of the disclosure may be implemented in a form of a software product. The software product may be stored in a non-volatile storage medium (which may be a CD-ROM, a USB flash drive, a removable hard disk, or the like) or on the network, including several instructions for instructing a computing device (which may be a personal computer, a server, a mobile terminal, a network device, or the like) to perform the methods according to the embodiments of the disclosure.

After considering the specification and practicing the embodiments disclosed herein, those of ordinary skill in the art may easily conceive of other embodiments of the disclosure. The disclosure is intended to cover any variations, uses, or adaptive changes of the disclosure. These variations, uses, or adaptive changes follow the general principles of the disclosure and include common general knowledge or common technical means in the art, which are not disclosed in the disclosure. The specification and the embodiments are merely considered as examples, and the actual scope and the spirit of the disclosure are pointed out by the following claims.

## Claims

1. A method for controlling a laser processing device, wherein the laser processing device is equipped with an execution module to execute laser processing, and the method comprises:
sensing an intervention during the laser processing performed by the laser processing device; and
controlling the execution module to switch a laser output to a weak light output in response to the intervention, wherein a power of a weak light is less than a reference laser power of the laser processing.

2. The method of claim 1, wherein after controlling the execution module to switch the laser output to the weak light output in response to the intervention, wherein the power of the weak light is less than the reference laser power of the laser processing, comprises:
controlling the execution module to terminate the weak light output and to continue the laser processing at the reference laser power, in response to the intervention being removed.

3. The method of claim 1, wherein the power of the weak light output is less than 39 milliwatt (mW).

4. The method of claim 1, wherein the intervention comprises an external intervening action, and wherein sensing the intervention during the laser processing performed by the laser processing device comprises:
during the laser processing performed by the execution module of the laser processing device, generating, by a sensing component of the laser processing device, an electrical signal in response to the external intervening action; and
sensing, according to the electrical signal sent by the sensing component, the external intervening action.

5. The method of claim 1, wherein controlling the execution module to switch the laser output to the weak light output in response to the intervention, comprises:
controlling a movement and a usage of laser of the execution module in response to the intervention, to make the movement of the execution module interrupted and to switch the laser output to the weak light output by reducing a power of the laser from the reference laser power.

6. The method of claim 5, wherein controlling the execution module to switch the laser output to the weak light output in response to intervention, further comprises:
controlling an on-off switching of the weak light at a preset time interval, to make the weak light flicker.

7. The method of claim 2, wherein the intervention is a reception of external data, and wherein before controlling the execution module to terminate the weak light output and to continue the laser processing at the reference laser power, in response to the intervention being removed, the method further comprises:
configuring and storing the external data as an update configuration for an executed program in response to the external data having been received, wherein the update configuration is used to control the laser processing performed by the execution module; and
continuing to execute, by the laser processing device, an interrupted program after the external data is stored and the intervention is removed.

8. The method of claim 1, wherein before sensing the intervention during the laser processing performed by the laser processing device, the method further comprises:
simulating and locating, by the laser processing device, a start trajectory point and an end trajectory point of movement control according to data configured for movement control; and
performing a movement pre-calculation according to the start trajectory point and the end trajectory point of movement control, to obtain a program instruction for a movement of the execution module on trajectory points, wherein the program instruction is used to control the movement of the execution module along the trajectory points distributed in a processing space.

9. The method of claim 1, wherein the laser processing device comprises a housing and a sensing component, at least part of the housing defines a processing space, and the housing comprises an openable barrier, the barrier is configured to weaken laser transmission from the processing space to an external space of the laser processing device, and the sensing component is configured to detect whether the barrier is opened or closed.

10. The method of claim 9, wherein the execution module comprises a movable head, the movable head is disposed in the housing, at least part of a processing object is in the processing space of the laser processing device, and the movable head is configured to send a laser to the processing space to process the processing object.

11. The method of claim 10, wherein before the laser processing performed by the laser processing device, the method further comprises:
generating a processing movement scheme for the movable head; and
generating a preview image of an expected target pattern to be produced on the processing object.

12. The method of claim 11, wherein the laser processing performed by the laser processing device comprises:
sending, by the movable head, the laser to the processing object according to the processing movement scheme to change a material of the processing object.

13. The method of claim 1, wherein the laser processing device comprises at least one camera disposed in the processing space, and the at least one camera is configured to capture an image of at least part of the processing object.

14. A laser processing device, comprising a housing, an execution module, a rail apparatus for driving the execution module to slide, and a processor, wherein at least part of the housing defines a processing space, the execution module and the rail apparatus are disposed in the processing space, and the processor is configured to execute the method of any one of claims 1 to 13.

15. A computer program medium, storing a computer-readable instruction, wherein the computer-readable instruction, when executed by a processor of a computer, causes the computer to execute the method of any one of claims 1 to 13.
